# EUROPEAN PATENT APPLICATION

(11) **EP 4 571 411 A1**
(43) Date of publication of application: **18.06.2025**
(21) Application number: 23307202.4
(22) Date of filing: 13.12.2023
(51) Int. Cl.: G02F 1/161

(54) **A FRAMED ELECTROCHROMIC DEVICE**

(71) Applicant: ESSILOR INTERNATIONAL, 94220 Charenton-Le-Pont (FR)
(72) Inventor: LUSSAGNET, Jean-Jacques, 31670 LABEGE (FR)
(74) Representative: Ipsilon

(57) **Abstract**

The invention concerns an optical electrochromic device comprising:
- an electrochromic cell (1),
- a frame (2) with a groove (21),
said device being characterized in that it further comprises:
- at least one elastic sealing part (3) arranged in said groove (21), and said electrochromic cell (1) is arranged in said frame (2) and is compressed by said at least one elastic sealing part (3)

## Description

The present invention relates to the field of the electrochromic frames and more particularly to the field of mounting electrochromic cells in a eyeglass frame.

Electrochromic devices consist of two electrochromic layers separated by an electrolytic layer. An external voltage supplies conducting electrodes arranged on either side of the electrochromic layers. The move of electrons from electrodes into the electrochromic layers along with charge balancing ions entering from the electrolyte modifies the optical absorption of the optical properties of the devices with optical transmission or absorption of the light through the superimposed layers of electrodes and electrochromic layers and electrolytic layer.

The electrochromic devices are mainly realized by essentially plane structures such as glass panels for separation walls or even optical lens for eyeglass. In both arrangements, the conducting electrodes of these devices must be connected to an electrical supply. Such connection is usually operated through a flex positioned on portion of the edge of the device and a connector mounted onto the flex. The electrochromic device is usually sealed between two shells positioned on both surfaces of the device; this sealing being realized by a deposit of glue along the perimeter of the edge of the device except at the portion receiving the plug for the filling of the cell surface of the electrochromic device with electrochromic formulation. However, this sealing may be altered in case the glue has adhesion problem. Further, the plug and its area are sealed by the use of components based on polyisobutylene or polyisobutene and completed by the deposit of a reinforcement glue to ensure the sealing of the plug. However, such sealing by the glue may alter the mounting of the electrochromic device on the frame if the glue quantity deposit is too thick. Additionally, even if the framing succeeds, the reinforcement glue may peel off so that the sealing of the electrochromic device becomes lost.

The present invention aims to remedy these drawbacks by proposing an arrangement capable of guaranteeing the sealing of the electrochromic device on its support frame regardless of the quality of the glue likely to be used to effect this sealing.

The present invention concerns an optical electrochromic device comprising :
- an electrochromic cell,
- a frame with a groove,

said device being characterized in that it further comprises:
   - at least one elastic sealing part arranged in said groove, and
said electrochromic cell is arranged in said frame and is compressed by said at least one elastic sealing part.

Additionally, the invention concerns a method for sealing an electrochromic device, said electrochromic device comprising:
- an electrochromic cell; and
- a frame with a groove,
said method being characterized in that it comprises:
- arranging at least one elastic sealing part in said groove,
- arranging said electrochromic cell in said frame and compressing said electrochromic cell by said at least one elastic sealing part.

The invention will be better understood from the following description, which refers to preferred embodiments, given as non-limiting examples, and explained with references to the attached schematic drawings, in which :

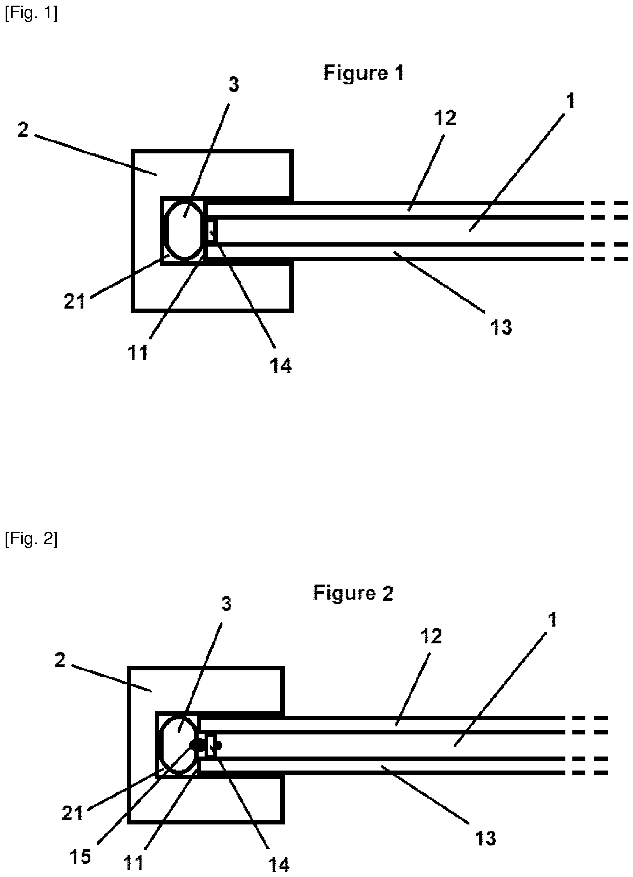

[Fig. 1] is a schematic representation of a first example of sealing arrangement of the electrochromic cell in a device of the invention in cross section according to a plane perpendicular to the axis of the groove of the frame of the device.
[Fig. 2] is a schematic representation of a second example of sealing arrangement of the electrochromic cell in a device of the invention in cross section according to a plane perpendicular to the axis of the groove of the frame of the device and close to the position of a plug sealing or clogging the filling aperture of the electrochromic cell.

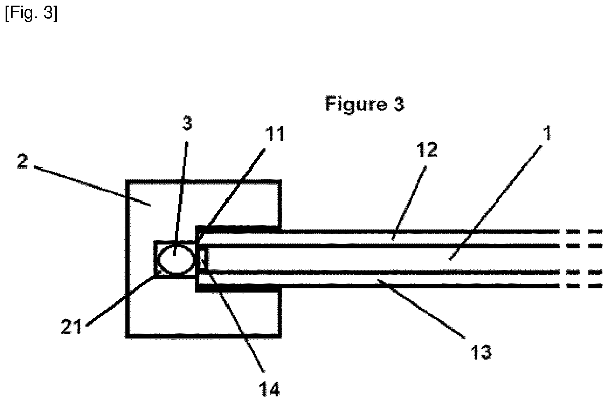

[Fig. 3] is a schematic representation of a third example of sealing arrangement of the electrochromic cell in a device of the invention in cross section according to a plane perpendicular to the axis of the groove of the frame of the device wherein the groove differs from the groove according to the first example illustrated by figure 1.

The present invention concerns an optical electrochromic device comprising :
- an electrochromic cell 1,
- a frame 2 with a groove 21,

said device being characterized in that it further comprises:
   - at least one elastic sealing part 3 arranged in said groove 21, and
said electrochromic cell 1 is arranged in said frame 2 and is compressed by said at least one elastic sealing part 3.

According to the present construction, the frame 2 is arranged according to a shape similar to the shape of the peripherical edge 11 of the electrochromic cell 1 so that the frame 2 is positioned against the electrochromic cell 1 and around the peripherical edge 11 of the electrochromic cell 1. The frame 2 comprises a groove 21 along at least a portion of its interior side, this groove 21 having dimensions in width similar to the thickness of the electrochromic cell 1 so that the electrochromic cell 1 be kept in position inside its corresponding frame 2 without accidental removal. The presence of an elastic sealing 3 in the depth of the groove 21 and having a width equal or thinner than the width of the groove 21 realizes a peripheral surface along the groove 21 to be in contact with at least a portion of the peripheral edge 11 of the electrochromic cell 1 and provide a peripheral pressure against the edge 11 of the cell 1. Preferably, in a cross section perpendicular to the axis of the groove 21, the elastic sealing 3 is wide enough to be in contact with the width of the peripheral edge 11 of the cell 1, from one face of the cell 1 to the other one. Because of its elastic properties, the elastic sealing 3 is able to support, endure and withstand deformation and perfectly match the surface of the peripheral edge 11 of the electrochromic cell 1. According to such arrangement, under the pressure provided against the edge 11 of the cell 1, the elastic sealing 3 is able to be partially deformed to fill the width of the groove 21 and to be in contact against the complete width of the edge 11 of the cell 1. According to specific example, because of its deformation properties, the elastic sealing part 3 may be compressed and support a 10% to 20% compression ratio of its material. Thus, an elastic sealing part 3 with a thickness about 1 mm positioned in the groove 21 of the frame 2 may be deformed by the pressure from the peripheral edge 11 of the electrochromic cell 1 to reach a thickness about 0,9 mm or even 0,8 mm. Said sealing part 3 being lodged in the groove 21 of the frame 2, the elastic sealing part 3 pressed by the peripheral edge 11 of the cell 1 against the depth of the groove 21 may be deformed and enlarged according to a cross section perpendicular to the axis of the groove 21 so that the elastic sealing part 3 is in contact with both internal sides of the groove 21.

According to an example relative to a variant of the electrochromic device of the invention shown on figure 3, in cross section according to a plane perpendicular to the axis of the groove, the groove 21 of the frame 2 is formed by two portions :
- a first thinner and deeper portion arranged to receive the elastic sealing part 3, and
- a second wider and more superficial portion arranged to receive the edge 11 of the cell 1.

The first thinner portion is positioned in the depth of the second wider portion. The width of the second wider and more superficial portion of the groove is similar to the thickness of the edge 11 of the cell 1 so that the cell 1 can be maintained by this second wider portion once inserted. The depth of the first thinner portion is lower than the thickness of the elastic sealing part 3 so that, once lodged in this first thinner and deeper portion of the groove 21, a portion of the elastic sealing 3 is at the junction between the first portion and the second portion of the groove 21 so that the elastic sealing 3 is pressed against the edge 11 of the cell 1 inserted in the second portion of the groove 21. Under pressure, the elastic sealing 3 may be partially deformed to fill the width of the first portion of the groove 21 and to be in contact against a portion of the edge 11 of the cell 1 inserted in the second portion of the groove 21.

The continuous contact of the elastic sealing 3 against the peripheral edge 11 of the electrochromic cell 1 provides a sealing so that no electrochromic liquid is able to flow outside the cell 1. Further, there is no risk of an unwanted infiltration of the oxygen inside the cell 1 providing an alteration of the electrochromic liquid of the cell 1.

It must be noticed that although the electrochromic device of the invention comprises one single elastic sealing part 3 arranged in the groove 21 of the frame 2, the device might be realized with at least two or several elastic sealing parts 3 juxtaposed along the groove of the frame 2. According to this second arrangement, the peripheral edge 11 of the electrochromic cell 1 would be in contact with several elastic sealing parts 3.

According to an example relative to a variant of the electrochromic device of the invention, said elastic sealing part 3 comprises elastomer. For example, the elastomer used is made of silicone rubber or at least one components providing similar or identical properties. Preferably, the elasticity modulus of the elastomer is comprised between 0.1 MPa and 10 Mpa. However, some elastomer may be chosen with an higher elasticity modulus about 30 MPa or even 2000 MPa.

According to an example relative to another variant of the electrochromic device of the invention, said elastic sealing part 3 is arranged along all of said groove 21. Such arrangement provides an electrochromic device wherein the insertion of the electrochromic cell 1 in the frame 2 is operated with the insertion of the edge of the electrochromic cell 1 into the groove 21 of the frame 2 so that the elastic sealing part 3 becomes in contact with the edge of the cell 1 and is pressed against this peripheral edge 11 of the cell 1. As the groove 21 may be positioned along the complete interior side of the frame, the complete peripheral edge 11 of the electrochromic cell 1 is in contact with the elastic sealing part 3 so that a pressure is provided by this sealing part 3 around the complete electrochromic cell 1.

According to an example relative to another variant of the electrochromic device of the invention, said elastic sealing part 3 is circular with an internal edge having a length smaller than the perimeter length of said electrochromic cell by less than 10 mm, preferably about 5 mm to 6 mm. The length of the internal edge of the elastic sealing part 3 and the length of the peripheral edge 11 of the electrochromic cell 1 are almost similar according to a almost circular arrangement so that the width or diameter length of the internal edge of the elastic sealing part 3 is smaller than the width or diameter length of the electrochromic cell 1 by 10 µm to 250 µm, preferably by 50 µm to 200 µm. Such arrangement with a smaller element mounted around a larger one guarantees an effective contact and a pressure of the elastic sealing part 3 against the peripheral edge 11 of the electrochromic cell 1. Further, such arrangement guarantees that the elastic sealing part 3 is mounted with tension on the peripheral edge 11 of the electrochromic cell 1 so that it may not be accidentally withdrawn from the cell 1.

According to an example relative to another variant of the electrochromic device of the invention, the cross section of said elastic sealing part 3 is a ring. This cross-sectional ring of the elastic sealing part 3 has a perimeter length similar or even identical to the width of the groove 21 inside the frame 2. The cross-sectional shape of the elastic sealing part 3 may be similar to the cross-sectional shape of the groove 21 of the frame 2 so that the elastic sealing part 3 fulfills perfectly the groove 21 of the frame 2. Further, the elastic sealing part 3 may be circular or similar to the shape of the frame 2 and/or to the shape of the peripheral edge 11 of the electrochromic cell 1 so that the elastic sealing part 3 be easily inserted into the frame 2 of the electrochromic device.

According to an example relative to another variant of the electrochromic device of the invention, said electrochromic cell 1 comprises at least two shells 12, 13 and said electrochromic device further comprises adhesive 14 arranged between two of said at least two shells 12, 13. This adhesive 14 is deposit along the respective edges of the at least two shells 12, 13 so that it makes a circular or almost circular connection between the respective surfaces of the two shells 12, 13 to provide a complementary sealing of the electrochromic cell 1. The adhesive 14 used for such sealing may be a sealing glue classically used with the electrochromic cell 1 and device or even a reinforcement glue. For example, this glue may be UV reactive or thermal reactive or made from components having similar properties.

According to an example relative to another variant of the electrochromic device of the invention, said elastic sealing part 3 is arranged so as to cover said adhesive 14 and so as to almost entirely cover a peripheral edge of said two of said at least two shells 12, 13. Indeed, because of a flex arranged to be connected to the conducting electrodes of the electrochromic cell 1, said elastic sealing part 3 is arranged to not cover the edge portion of the device wherein the flex is positioned so that the elastic sealing part 3 provides an aperture making the flex in connection with the electrochromic formulation fulfilling the cell. Such arrangement combines the sealing properties of the adhesive 14 with the sealing properties of the elastic sealing 3. Further, as the elastic sealing part 3 is pressed against the peripheral edge of the shells 12, 13 to cover this edge, the elastic sealing part 3 provides a protection of the adhesive 14 arranged between two of said at least two shells 12, 13 so that the risks for the adhesive 14 to be altered or to peel off are restricted or even avoided.

According to an example relative to another variant of the electrochromic device of the invention, the electrochromic device further comprises a plug 15 arranged between two of said at least two shells 12, 13. According to such arrangement, the plug 15 is positioned on a portion of the edges of the at least two shells 12, 13. Preferably, a part of this plug 15 is positioned between the two shells 12, 13 and between two portions of the adhesive 14 arranged between two of said at least two shells 12, 13. According to this preferred arrangement, the plug is surrounded by the adhesive 14 and the two shells 12, 13 so that the plug 15 is able to be sealed with the shells 12, 13. It must noticed that the sealing of the plug 15 is realized by non-conductive materials to provide for the necessary electrical isolation of the electrochromic cell 1 with respect to the outside.

According to an example relative to another variant of the electrochromic device of the invention, said elastic sealing part 3 is arranged so as to cover said plug 15. The cover of the plug 15 provides an additional sealing structure to impede a leak of electrochromic liquid and/or an infiltration of oxygen in the cell 1. Because of its deformable structure, the elastic sealing part 3 is able to be easily adjusted to the relief made by the surface of plug 15 at its connection point with respect to the surface of the peripheral edge 11 of the cell 1.

According to an example relative to another variant of the electrochromic device of the invention, the electrochromic device further comprises a flex arranged to be connected to the conducting electrodes of the electrochromic cell 1. This flex is positioned on a portion of the edges of the at least two shells 12, 13 and, more particularly positioned between the two shells 12, 13 and between two portions of the adhesive 14 arranged between two of said at least two shells 12, 13. Preferably, the flex is positioned on a portion of the edges of the at least two shells 12, 13 and glued with the adhesive 14 arranged along a portion of the edge of the electrochromic device between two of said at least two shells 12, 13. However, the elastic sealing part 3 of the electrochromic device is arranged so as to not cover said flex. Thus, the elastic sealing part 3 does not prevent a connection between the electrochromic formulation fulfilling the cell and an electrical supply through the flex.

According to an example relative to another variant of the electrochromic device of the invention, the electrochromic device is an eyewear.

An additional aspect of the invention concerns a method for sealing an electrochromic device, said electrochromic device comprising:
- an electrochromic cell 1; and
- a frame 2 with a groove 21,
said method being characterized in that it comprises:
- arranging at least one elastic sealing part 3 in said groove 21,
- arranging said electrochromic cell 1 in said frame 2 and compressing said at least one elastic sealing part 3 by said electrochromic cell 1.

The compressing step is operated so that the elastic sealing part 3 is pressed against the depth of the groove 21. The elastic sealing part 3 is deformed to fulfill the space between the deepest side of the groove 21 and the peripheral edge 11 of the electrochromic cell 1.

According to an example relative to a variant of the method of the invention, the electrochromic cell 1 comprises at least two shells 12, 13 and said method further comprises:
- arranging adhesive 14 between two of said at least two shells 12, 13.

This arranging step is operated previously to the insertion of the electrochromic cell 1 in the groove 21 of the frame 2. According to a particular example of this variant, the deposit of the adhesive 14 is carried out so that a portion or an area along the edge of the shells 12, 13 is left without adhesive 14. This portion without adhesive 14 provides an aperture for the filling of the electrochromic cell with the corresponding formulation.

According to an example relative to another variant of the method of the invention, the electrochromic cell 1 further comprises:
- arranging said elastic sealing part 3 so as to cover said adhesive 14 between said at least two shells 12, 13 and so as to almost entirely cover a peripheral edge of said two of said at least two shells 12, 13.

The covering step of the peripheral edge of the shells 12, 13 by an elastic sealing part 3 may be carried out along the complete peripheral edge or at least one single portion of the peripheral edge of the shells 12, 13. Preferably, this covering step may be carried out while the peripheral edge 11 of the electrochromic cell 1 is inserted into the groove 21 of the frame 2. Alternatively, this covering step is carried out by mounting said elastic sealing part 3 onto or around the peripheral edge 11 of the electrochromic cell 1 previously to its insertion into the groove 21 of the frame 2. This covering step is preferably carried out so that the elastic sealing part 3 provides an aperture on a portion of the peripheral edge allowing the flex to be in connection with the electrochromic formulation in the cell.

According to an example relative to another variant of the method of the invention, the method further comprises:
- arranging a plug 15 between two of said at least two shells 12, 13.

This arranging step of the plug 15 is operated next to a deposit step of the adhesive 14 between the at least two shells 12, 13 and the assembling of these two shells 12, 13 so that an aperture is provided by an area on the edge of the cell wherein there is a gap without adhesive 14 between the two shells 12, 13. Moreover, this arranging step of the plug 15 is operated next to the filling of the cell with the electrochromic formulation through this aperture. The arranging step of the plug 15 provides the sealing or the clogging of the electrochromic cell so that the plug 15 is inserted between the two shells 12, 13 and portions of the adhesive 14. Further, this arranging step of the plug 15 is operated previously to the covering step of the peripheral edge 11 of the electrochromic cell 1 with at least a portion of the elastic sealing part 3.

According to an example relative to another variant of the method of the invention, the electrochromic cell 1 further comprises:
- arranging said elastic sealing part 3 so as to cover said plug 15.

This arranging step is operated jointly or simultaneously to the covering step of the peripheral edge 11 of the electrochromic cell 1 with at least a portion of the elastic sealing part 3.

The present invention is not limited to the embodiment described and shown in the attached drawings. Modifications remain possible, in particular from the point of view of the constitution of the various elements or by substitution of technical equivalents, without however leaving the field of protection of the invention.

## Claims

1. An optical electrochromic device comprising:
- an electrochromic cell (1),
- a frame (2) with a groove (21),
said device being **characterized in that** it further comprises:
- at least one elastic sealing part (3) arranged in said groove (21), and
said electrochromic cell (1) is arranged in said frame (2) and is compressed by said at least one elastic sealing part (3).

2. An electrochromic device according to claim 1, **characterized in that** said electrochromic cell (1) comprises at least two shells (12, 13) and said electrochromic device further comprises adhesive (14) arranged between two of said at least two shells (12, 13).

3. An electrochromic device according to claim 2, **characterized in that** said elastic sealing part (3) is arranged so as to cover said adhesive (14) and so as to almost entirely cover a peripheral edge of said two of said at least two shells (12, 13).

4. An electrochromic device according to claim 2 or 3, **characterized in that** the electrochromic device further comprises a plug (15) arranged between two of said at least two shells (12, 13).

5. An electrochromic device according to claim 4, **characterized in that** said elastic sealing part (3) is arranged so as to cover said plug (15).

6. An electrochromic device according to any of the preceding claims, **characterized in that** said elastic sealing part (3) comprises elastomer.

7. An electrochromic device according to any of the preceding claims, **characterized in that** said elastic sealing part (3) is arranged along all of said groove (21).

8. An electrochromic device according to any of the preceding claims, **characterized in that** said elastic sealing part (3) is circular with an internal edge having a length smaller than the perimeter length of said electrochromic cell by less than 10 mm.

9. An electrochromic device according to any of the preceding claims, **characterized in that** said elastic sealing part (3) is a ring.

10. An electrochromic device according to any of the preceding claims, **characterized in that** the electrochromic device is an eyewear.

11. A method for sealing an electrochromic device, said electrochromic device comprising:
- an electrochromic cell (1); and
- a frame (2) with a groove (21),
said method being **characterized in that** it comprises:
- arranging at least one elastic sealing part (3) in said groove (21),
- arranging said electrochromic cell (1) in said frame (2) and compressing said at least one elastic sealing part (3) by said electrochromic cell (1).

12. A method according to claim 11, **characterized in that** said electrochromic cell (1) comprises at least two shells (12, 13) and **in that** said method further comprises:
- arranging adhesive (14) between two of said at least two shells (12, 13).

13. A method according to claim 12, **characterized in that** said method further comprises:
- arranging said elastic sealing (3) part so as to cover said adhesive (14) between said at least two shells (12, 13) and so as to almost entirely cover a peripheral edge (11) of said two of said at least two shells (12, 13).

14. A method according to claim 12 or 13, **characterized in that** said method further comprises:
- arranging a plug (15) between two of said at least two shells (12, 13).

15. A method according to claim 14, **characterized in that** it further comprises:
- arranging said elastic sealing part (3) so as to cover said plug (15).
